# EUROPEAN PATENT APPLICATION

(11) **EP 3 591 338 A2**
(43) Date of publication of application: **08.01.2020**
(21) Application number: 19183784.8
(22) Date of filing: 02.07.2019
(51) Int. Cl.: G01C 21/34, G01C 21/36

(54) **NAVIGATION METHOD, NAVIGATION DEVICE, DEVICE AND MEDIUM**

(30) Priority: 03.07.2018 CN 201810719960
(71) Applicant: Beijing Baidu Netcom Science and Technology Co., Ltd., Beijing 100085 (CN)
(72) Inventor: HUANG, Jizhou, Beijing, 100085 (CN)
(74) Representative: Zumstein, Angela

(57) **Abstract**

The present disclosure provides a navigation method, a navigation device, a device and a medium. The method includes: generating a navigation request comprising a navigation start point, a navigation end point and at least one navigation constraint, based on a navigation requirement voice input by a user; and determining a navigation route based on the navigation start point, the navigation end point and the at least one navigation constraint.

## Description

### TECHNICAL FIELD

Embodiments of the present disclosure generally relate to the field of navigation technologies, and more particularly, to a navigation method, a navigation device, a device and a medium.

### BACKGROUND

With the rapid development of electronic maps and mobile Internet technologies, navigation products are widely applied in various fields of work and life because of their convenience.

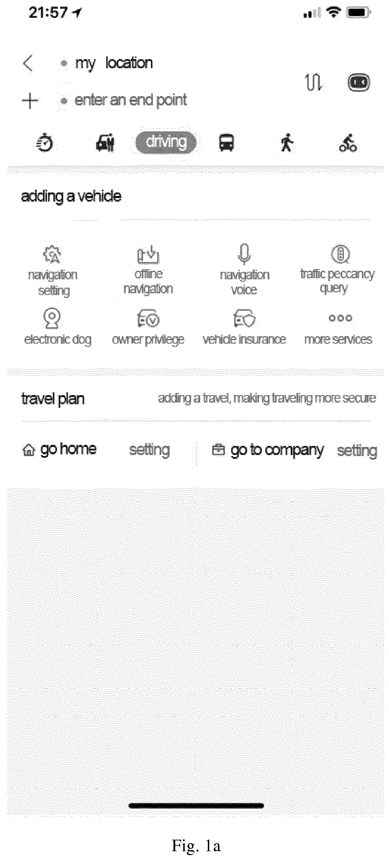

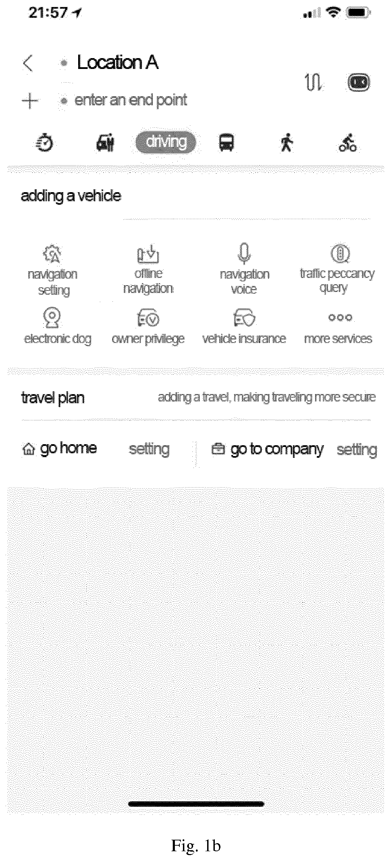

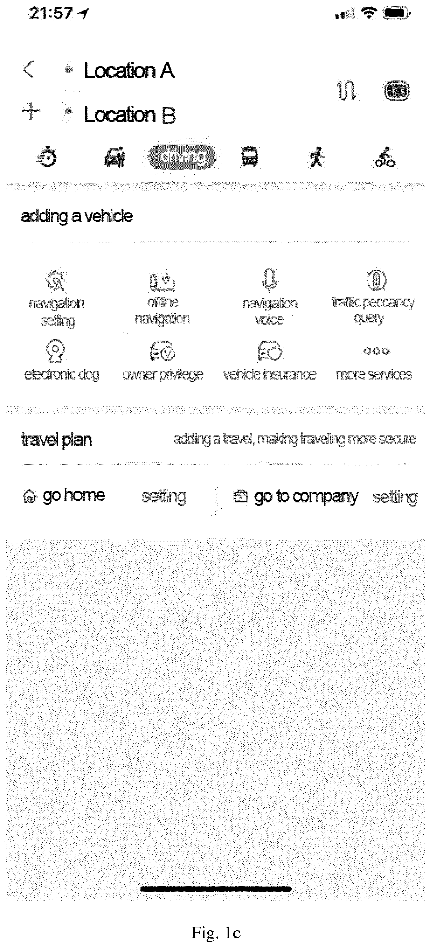

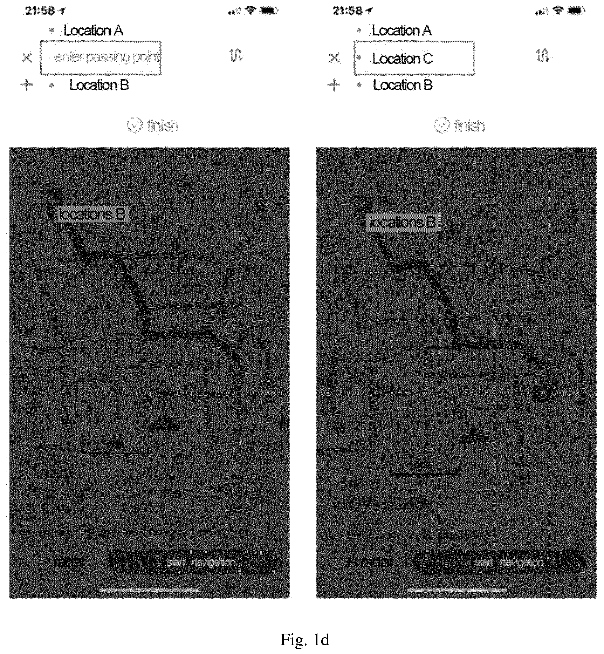

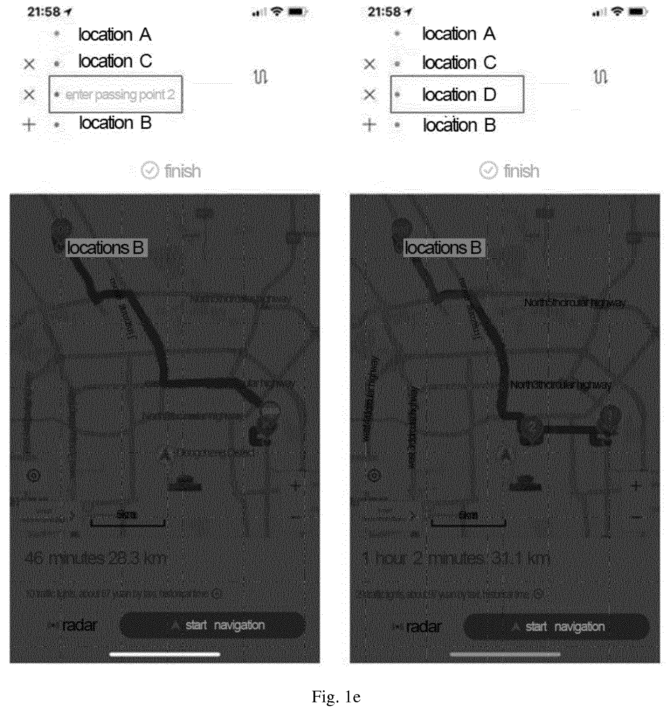

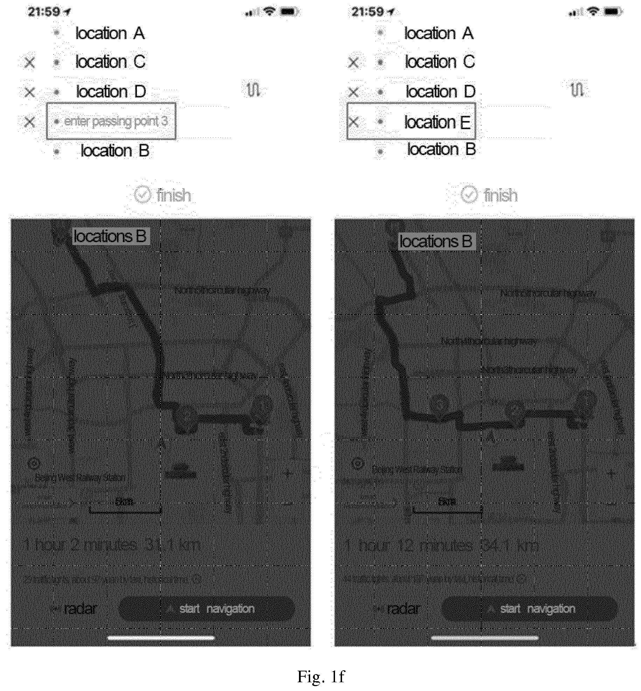

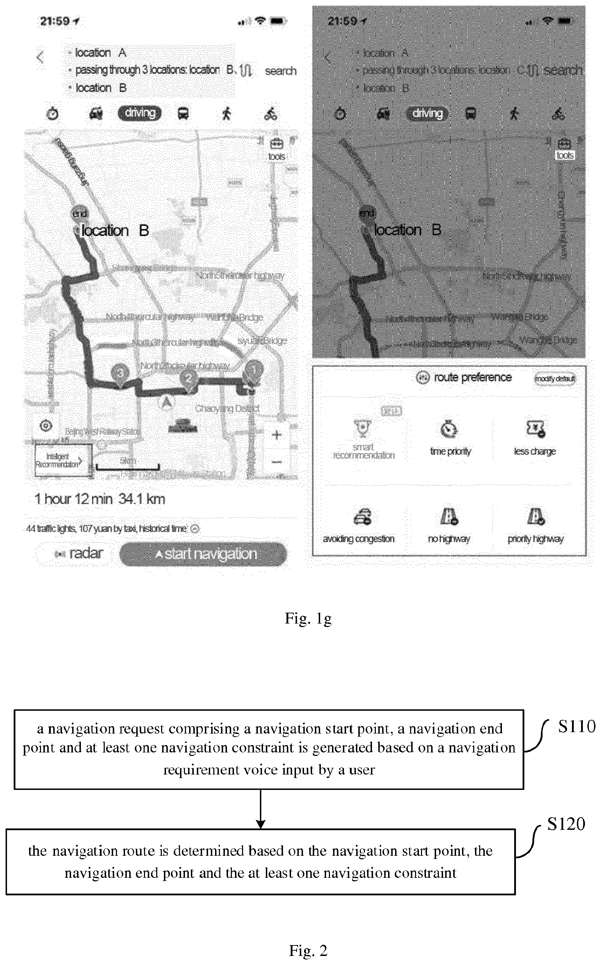

In the current map client, when the user wants to navigate with multiple targets and constraints, many steps need to be operated manually, such as starting from location A, going to location B, passing location C, location D, location E, setting route preference (the fastest, the shortest distance, etc.). Referring to Fig. 1a, the navigation needs to be clicked first, referring to Fig. 1b and Fig. 1c, the start point (location A) and the end point (location B) need to be entered manually, referring to Fig. 1d, Fig. 1e and Fig. 1f, three passing points (location C, location D, location E) are manually added, and referring to Fig. 1g, the navigation plans satisfying the requirements (such as the fastest, the shortest distance, etc.,) are selected manually from the multiple planned routes.

From the above description, it can be seen, in order to implement the navigation, such as starting from Tuanjiehu subway station, passing Agricultural Exhibition Center, Nanluoguxiang, Beijing Zoo, going to building A, and requiring the fastest route, at least 6 manual operations are required. Besides, when the user is driving, in order to implement the above operations, the user may need to stop first, and then continue driving after finishing the above operations, otherwise, if the user manually performs the operations during driving, for one thing, it might be dangerous, and for another, it is difficult to operate for the screen of the mobile phone is small, the operation time will be long, the risk of driving will be increased.

### SUMMARY

According to a first aspect of the present disclosure, there is provided a navigation method. The method includes: generating a navigation request including a navigation start point, a navigation end point and at least one navigation constraint, based on a navigation requirement voice input by a user; and determining a navigation route based on the navigation start point, the navigation end point and the at least one navigation constraint.

According to a second aspect of the present disclosure, there is provided a navigation device. The device includes a navigation request generating module and a navigation route determining module. The navigation request generating module is configured to generate a navigation request including a navigation start point, a navigation end point and at least one navigation constraint, based on a navigation requirement voice input by a user. The navigation route determining module is configured to determine a navigation route based on the navigation start point, the navigation end point and the at least one navigation constraint.

According to a third aspect of the present disclosure, there is provided a device, including one or more processors and a memory configured to store one or more programs. When the one or more programs are executed by the one or more processors, causes the one or more processors to implement the navigation method according to embodiments of the present disclosure.

According to a fourth aspect of the present disclosure, there is provided a computer readable storage medium having stored thereon a computer program that, when executed by a processor, causes the navigation method according to embodiments of the present disclosure to be implemented.

According to embodiments of the present disclosure, the navigation request including the navigation start point, the navigation end point and the at least one navigation constraint is generated based on the navigation requirement voice input by the user, and the navigation route is determined based on the generated navigation request, thereby, the user can express the requirement by voice interaction, and the system can automatically recognize the navigation start point, the navigation end point and the at least one navigation constraint from the sentence input by the user, and accordingly plan the driving navigation route satisfying the user's requirement. Thus, in the navigation process, the user's hands can be liberated, the convenience of the navigation application can be improved, and the safety of using the navigation product during driving can be improved.

### BRIEF DESCRIPTION OF THE DRAWINGS

Fig. 1a to Fig. 1g are schematic diagrams of performing a navigation with multiple targets and constraints by manual operation in the related art;
Fig. 2 is a flow chart of a navigation method according to Embodiment one of the present disclosure.
Fig. 3 is a flow chart of a navigation method according to Embodiment two of the present disclosure.
Fig. 4 is a flow chart of a navigation method according to Embodiment three of the present disclosure.
Fig. 5 s a flow chart of a navigation method according to Embodiment four of the present disclosure.
Fig. 6a to Fig. 6c are schematic diagrams of adopting the navigation method according to Embodiment four of the present disclosure.
Fig. 7 is a block diagram of a navigation device according to Embodiment five of the present disclosure.
Fig. 8 is a schematic diagram of a device according to Embodiment six of the present disclosure.

### DETAILED DESCRIPTION

The present disclosure will be described in detail below with reference to the accompanying drawings and the embodiments. It should be understood that, the specific embodiments described herein are only used to explain the present disclosure rather than to limit the present disclosure. In addition, it should also be noted that, for convenience of description, only part but not all structures related to the present disclosure are illustrated in the accompanying drawings.

### Embodiment one

Fig. 2 is a flow chart of a navigation method according to Embodiment one of the present disclosure. The embodiment may be applicable to the case where the user performs navigation with a plurality of constraints. The method may be performed by a navigation device which may be implemented by software and/or hardware. For example, the navigation device may be a remote server or navigation equipment. Referring to Fig. 2, the navigation method in the embodiment may include the followings.

At block S110, a navigation request including a navigation start point, a navigation end point and at least one navigation constraint is generated based on a navigation requirement voice input by a user.

In at least one embodiment, the navigation constraint may include any condition that constrains the navigation route, for example, the condition may be the passing point and/or the route preference. The route preference may include at least one of the shortest time consuming, the shortest distance, no traffic jam, the least traffic lights, taking certain routes, not taking certain routes, priority highways, and less highways. The number of passing points may be one, two or more.

In an embodiment, the navigation request includes the structured navigation request, generating the navigation request including the navigation start point, the navigation end point and the at least one navigation constraint based on the navigation requirement voice input by the user includes: converting the navigation requirement voice input by the user into a navigation requirement text using voice recognition technology; performing semantic analysis on the navigation requirement text to acquire a semantic analysis result, and determining the navigation start point, the navigation end point and the at least one navigation constraint based on the semantic analysis result; and generating the structured navigation request based on the navigation start point, the navigation end point and the at least one navigation constraint.

The structure of the navigation request may be the same as that of the manual input navigation request in the related art, such that the program code for determining the navigation route by using the navigation request in the related art will not be changed. Thereby, the embodiment may be applicable to the related art with less program codes to be changed, to solve the deficiencies of the related art. Moreover, more navigation constraints may be added while remaining compatibility with the structure in the related art.

In detail, the navigation constraint may be determined by recognizing the keywords in the navigation requirement text. For example, when the keywords such as "passing" or "passing through" are recognized in the navigation requirement text, the word (indicating a location) followed behind the keyword may be extracted as the passing point in the navigation constraint. When the words indicating demands such as "the shortest time consuming", "the least time consuming", "the shortest distance" and "no traffic jam" are recognized in the navigation requirement text, the corresponding route preference parsed by the words indicating the demands may be taken as the navigation constraint.

Similarly, the navigation start point and the navigation end point may also be determiend by recognizing the keywords in the navigation requirement text. For example, when the keyword such as "from...to..." is recognized in the navigation requirement text, the word (indicating a location) followed behind "from" may be taken as the navigation start point, and the word (indicating another location) followed behind "to" may be taken as the navigation end point.

In at least one embodiment, generating the navigation request including the navigation start point, the navigation end point and the at least one navigation constraint based on the navigation requirement voice input by the user includes: converting the navigation requirement voice input by the user into the navigation requirement text using voice recognition technology, and matching the navigation requirement text to a preset navigation requirement template, to determine the navigation requirement.

The navigation requirement template may include a plurality of descriptors and slots for determining and parsing navigation requirement information. For example, given the template: [W: 0-10] starting from [D: POI], going to [W: 0-10][D: POI] first, then going to [W: 0-10][D: POI], then going to [W: 0-10][D: POI], and finally going to [W: 0-10][D: POI], please help me plan the [F: Routing] route, in which, [W: 0-10] is a slot, indicating that 0 to 10 characters can be matched here, [D: POI] is also a slot, indicating that this is a Point of Interest (POI) or a location, and dictionary matching or POI recognition may be used for judgement in implementation. [F: Routing] is also a slot, indicating that this is a certain route preference description, which may be dictionary matching or the route preference analysis method in implementation, the purpose is to parse the corresponding route preference based on free text input by the user. For example, based on the description "the fastest route and no traffic jam", the route preference "fastest route" may be parsed out. The above template is merely an example, and in actual application development, other different types of navigation templates can be preset.

Based on the above navigation requirement template, the navigation requirement text can be matched, and the corresponding start point, the end point and the navigation constraint can be parsed out.

For example, given the navigation requirement text: I want to start from Tuanjiehu subway station, go to the Agricultural Exhibition Center first, then go to Nanluoguxiang, then go to the Beijing Zoo, and finally go to building A, and please help me plan the fastest route without traffic jam. After matching and processing of the navigation requirement template, the following structured navigation constraint may be determined.
The start point: Tuanjiehu subway station.
The passing point 1: Agricultural Exhibition Center.
The passing point 2: Nanluoguxiang.
The passing point 3: Beijing Zoo.
The end point: Building A.
Navigation preferences: the fastest route.

At block S120, a navigation route is determined based on the navigation start point, the navigation end point and the at least one navigation constraint.

Specifically, the candidate navigation routes may be determined according to the navigation start point and the navigation end point, and then the navigation route may be filtered out from the determined candidate navigation routes based on the at least one navigation constraint.

For example, the user inputs the navigation requirement voice: I want to start from location A, pass location B, to location C, please help me plan the shortest navigation route, and then the navigation requirement voice can be recognized to generate the navigation requirements text, and the navigation requirement text can be analyzed to acquire the analysis result. Based on the analysis result, it can be determined that the navigation start point is location A, the navigation end point is location C, and the navigation constraint is the passing point B and the shortest time consuming. Based on the location A, the location C, the passing point B and the shortest time consuming, the structured navigation request can be determined, and the navigation route can be determined.

With the technical solution according to the embodiment, the navigation request including the navigation start point, the navigation end point and the at least one navigation constraint is generated based on the navigation requirement voice input by the user, and the navigation route is determined based on the generated navigation request, thereby, the user can express the requirement by voice interaction, and the system can automatically recognize the navigation start point, the navigation end point and the at least one navigation constraint from the sentence input by the user, and accordingly plan the driving navigation route satisfying the user's requirement. Thus, in the navigation process, the user's hands can be liberated, the convenience of the navigation application can be improved, and the safety of using the navigation product during driving can be improved.

Furthermore, the structured navigation request includes at least one passing point information, and generating the structured navigation request based on the navigation start point, the navigation end point and the at least one navigation constraint includes: generating the structured navigation request using a preset navigation request format including a passing point based on the navigation start point, the navigation end point and at least one passing point information.

Furthermore, the structured navigation request includes the route preference, generating the structured navigation request based on the navigation start point, the navigation end point and the at least one navigation constraint includes: generating the structured navigation request using a navigation request format associated with a route preference based on the navigation start point, the navigation end point and a route preference.

### Embodiment two

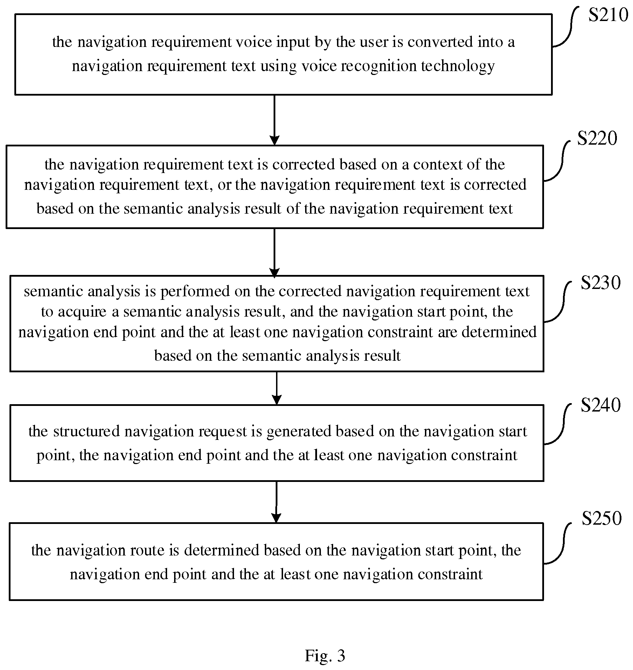

Fig. 3 is a flow chart of a navigation method according to Embodiment two of the present disclosure. The embodiment is an alternative solution on the basis of the above embodiments. Referring to Fig. 3, the navigation method provided in the embodiment includes the followings.

At block S210, the navigation requirement voice input by the user is converted into a navigation requirement text using voice recognition technology.

At block S220, the navigation requirement text is corrected based on a context of the navigation requirement text, or the navigation requirement text is corrected based on the semantic analysis result of the navigation requirement text.

Specifically, correcting the navigation requirement text based on the context of the navigation requirement text includes: correcting the above context of the navigation requirement text based on the below context of the navigation requirement text.

For example, the navigation requirement text before the correction may be: help me draw the fastest route, after the correction, the navigation requirement text may be: help me plan the fastest route.

Specifically, correcting the navigation requirement text based on the semantic analysis result of the navigation requirement text includes: matching keywords in the semantic analysis result of the navigation requirement text with a pre-stored POI name based on Hanzi and/or Pinyin, and replacing the keywords in the semantic analysis result with the pre-stored and matched POI name.

For example, the keyword in the semantic analysis result of the navigation requirement text may include Jiajie Zhang, based on Hanzi and/or Pinyin, the pre-stored and matched POI name may be Zhangjiajie (a famous place in Hunan Province), and then Jiajie Zhang in the navigation requirements text can be replaced to Zhangjiajie.

At block S230, semantic analysis is performed on the corrected navigation requirement text to acquire a semantic analysis result, and the navigation start point, the navigation end point and the at least one navigation constraint are determined based on the semantic analysis result.

At block S240, the structured navigation request is generated based on the navigation start point, the navigation end point and the at least one navigation constraint.

At block S250, the navigation route is determined based on the navigation start point, the navigation end point and the at least one navigation constraint.

With the technical solution according to embodiments of the present disclosure, the navigation requirement text is corrected based on the context or the semantic analysis result of the navigation requirement text, such that the accuracy of the navigation requirement text can be improved, and the accuracy of the navigation route determined based on the navigation request extracted from the navigation requirement text can be improved.

### Embodiment three

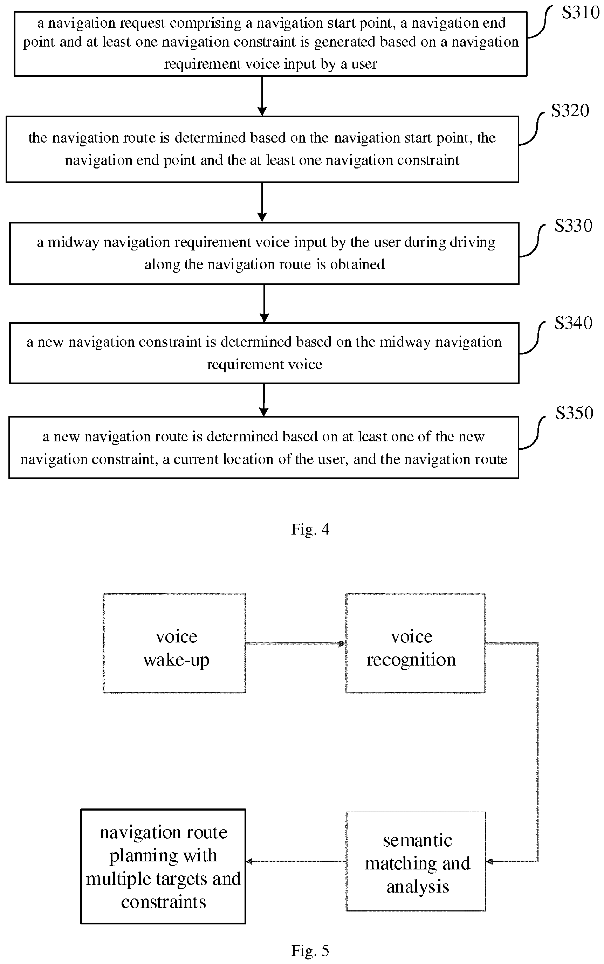

Fig. 4 is a flow chart of a navigation method according to Embodiment three of the present disclosure. The embodiment is an alternative solution on the basis of the above embodiments. Referring to Fig. 4, the navigation method provided in the embodiment includes the followings.

At block S310, a navigation request including a navigation start point, a navigation end point and at least one navigation constraint is generated based on a navigation requirement voice input by a user.

At block S320, the navigation route is determined based on the navigation start point, the navigation end point and the at least one navigation constraint.

At block S330, a midway navigation requirement voice input by the user during driving along the navigation route is obtained.

Specifically, the midway navigation requirement voice may be any voice indicating user's requirement, such as "vehicle refueling", "vehicle charging" or "having a meal".

At block S340, a new navigation constraint is determined based on the midway navigation requirement voice.

Specifically, determining the new navigation route based on the midway navigation requirement voice includes: determining a target POI type based on the midway navigation requirement voice, and taking a POI belonging to the target point of interest type as the new navigation constraint.

At block S350, a new navigation route is determined based on at least one of the new navigation constraint, a current location of the user, and the navigation route.

In an embodiment, as an example, the midway navigation requirement voice is "vehicle charging", and the navigation constraint of the current navigation route is passing location B and the shortest time consuming. In the course of driving along the current navigation route determined based on the navigation requirement voice of the user, the midway navigation requirement voice "vehicle charging" input by the user is received. The voice can be recognized to obtain the midway navigation requirement text: vehicle charging. The target POI type can be determined as a charging station based on the navigation requirement text. The surrounding charging stations can be searched, and the charging station satisfying set conditions (such as closest to the current location) can be determined as the target charging station. Based on the current location and the target charging station, the navigation route from the current location to the target charging station can be determined. Alternatively, based on the current location, the location B (if location B is not passed), the shortest time consuming, the navigation end point and the target charging station, the new navigation route from the current location to the navigation end point, passing the target charging station and the location B, and having the shortest time consuming can be determined.

With the technical solution of the present disclosure, the midway navigation requirement voice input by the user during driving along the navigation route is obtained, the new navigation constraint can be determined based on the midway navigation requirement voice, and the new navigation route can be determined based on at least one of the new navigation constraint, the current location of the user and the navigation route, thereby, in the course of traveling along the navigation route, the navigation route can be adjusted according to the new navigation requirement voice to satisfy user's new requirements.

### Embodiment four

Fig. 5 is a flow chart of a navigation method according to Embodiment four of the present disclosure. The embodiment is an alternative solution on the basis of the above embodiments. Referring to Fig. 5, the navigation method provided in the embodiment includes the followings.

A voice assistant is woken up after a preset wake-up voice input by the user is received or after it is detected that the user triggers the preset wake-up widget, and the navigation requirement voice input by the user is received.

The preset wake-up voice may be customized by the user.

Voice recognition can be performed on the received navigation requirement voice input by the user, and the recognized navigation requirement text can be displayed.

The navigation requirement text may be different combinations of subsets satisfying requirements such as starting from location A, going to location B, passing location C, location D and location E, having route preference of the fastest and/or less traffic lights.

For example, the navigation requirement text can be any of the following queries.
1) I want to start from Tuanjiehu Subway Station, pass Agricultural Exhibition Center and Nanluoguxiang, and finally go to A Building, and please help me plan the fastest route without traffic jam.
   The navigation requirement text includes the navigation start point, the navigation end point, the passing point and the route preference.
2) I want to start from the current location, go to the Science Park A, and pass Building B.
   The navigation requirement text includes the navigation start point, the navigation end point, and the passing point.
3) I want to go to Building A, pass Hualian Market in Shangdi and Wudaokou, and please help me plan the shortest route.

The navigation requirement text includes the navigation end point, the passing point, and the route preference.

Based on the semantic analysis result of the navigation requirement text, the navigation start point, the navigation end point, the passing point and the route preference can be determined, and the navigation route can be determined based on the determined structured navigation start point, the navigation end point, the passing point and the route preference, and displayed to the user.

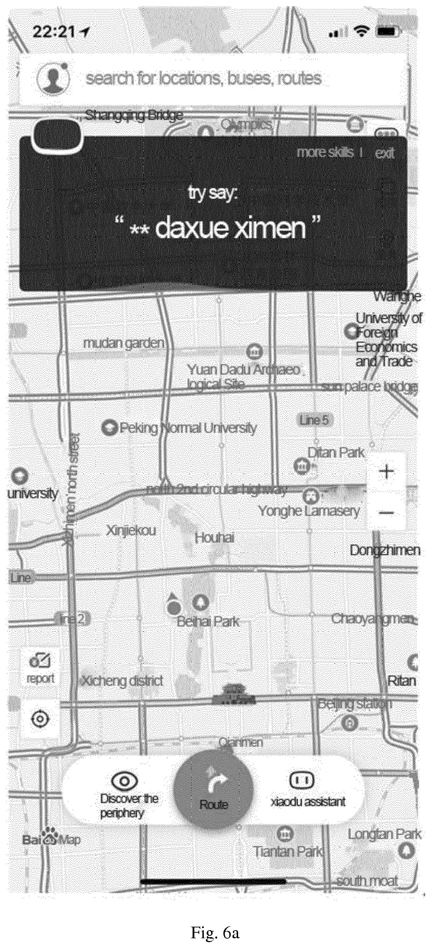

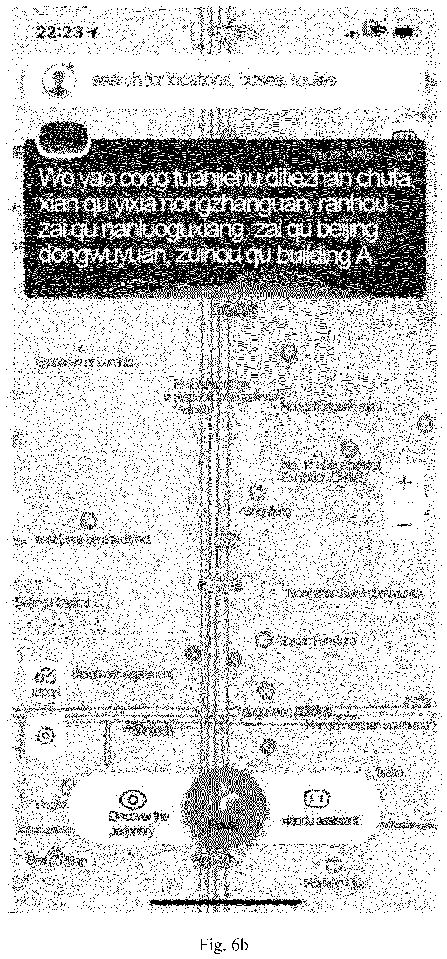

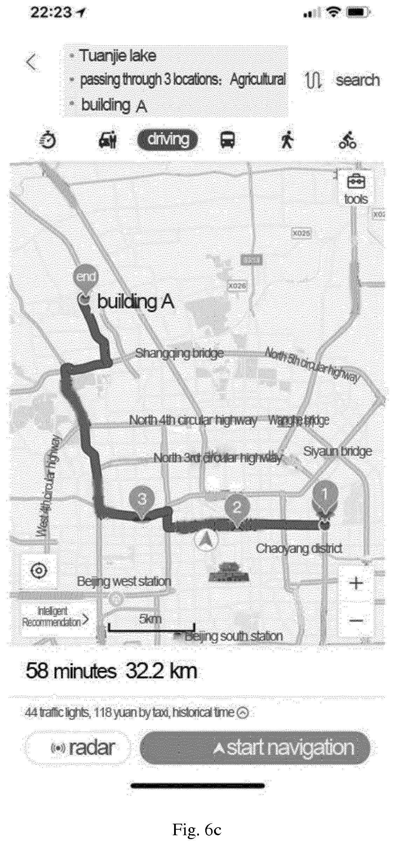

As an example, given the navigation requirement text: I want to start from Tuanjiehu subway station, go to the Agricultural Exhibition Center first, then go to Nanluoguxiang, then go to the Beijing Zoo, and finally go to building A, and please help me plan the fastest route without traffic jam. Referring to Fig. 6a, after the preset wake-up voice input by the user is received, the voice assistant may be woken up, and can receive the navigation requirement voice input by the user. Referring to Fig. 6b, voice recognition can be performed on the received navigation requirement voice input by the user, to display the recognized navigation requirement text. Referring to Fig. 6c, based on the semantic analysis result of the navigation requirement text, it can be determined that the navigation start point is Tuanjie Lake, and the navigation end point is building A, the passing points are Agricultural Exhibition Center, Nanluoguxiang and Beijing Zoo, and the route preference is the fastest and no traffic jam. The navigation start point, the navigation end point, the passing point and the route preference may be structured as follows:
The start point: Tuanjiehu subway station.
The passing point 1: Agricultural Exhibition Center.
The passing point 2: Nanluoguxiang.
The passing point 3: Beijing Zoo.
The end point: Building A.
The navigation preferences: the fastest route.

Referring to Fig. 6c, the navigation route can be determined based on the above structured navigation start point, the navigation end point, the passing point and the route preference, and displayed to the user.

With the technical solution of embodiments of the present disclosure, the navigation request including the navigation start point, the navigation end point and the at least one navigation constraint is generated based on the navigation requirement voice input by the user, and the navigation route is determined based on the generated navigation request, thereby, the user can express the requirement by voice interaction, and the system can automatically recognize the navigation start point, the navigation end point and the at least one navigation constraint from the sentence input by the user, and accordingly plan the driving navigation route satisfying the user's requirement.

It should be noted that, the above implementation manners may be combined, to determine the navigation route satisfying multiple constraints by voice interaction manner.

### Embodiment five

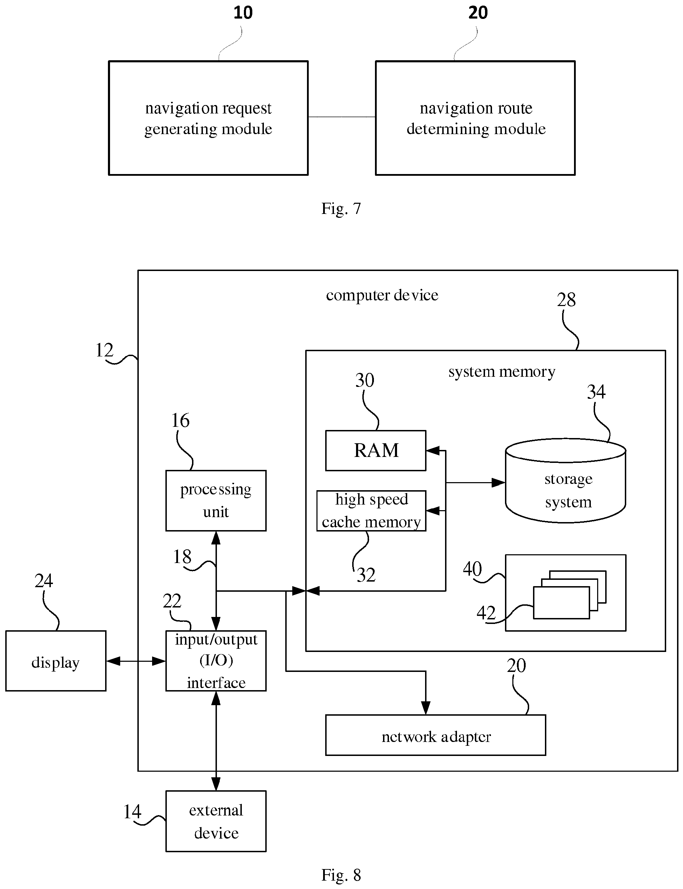

Fig. 7 is a block diagram of a navigation device according to Embodiment five of the present disclosure. As illustrated in Fig. 7, the navigation device includes a navigation request generating module 10 and a navigation route determining module 20.

The navigation request generating module 10 is configured to generate a navigation request including a navigation start point, a navigation end point and at least one navigation constraint, based on a navigation requirement voice input by a user.

The navigation route determining module 20 is configured to determine a navigation route based on the navigation start point, the navigation end point and the at least one navigation constraint.

According to embodiments of the present disclosure, the navigation request including the navigation start point, the navigation end point and the at least one navigation constraint is generated based on the navigation requirement voice input by the user, and the navigation route is determined based on the generated navigation request, thereby, the user can express the requirement by voice interaction, and the system can automatically recognize the navigation start point, the navigation end point and the at least one navigation constraint from the sentence input by the user, and accordingly plan the driving navigation route satisfying the user's requirement. Thus, in the navigation process, the user's hands can be liberated, the convenience of the navigation application can be improved, and the safety of using the navigation product during driving can be improved.

Furthermore, the navigation request generating module 10 includes a navigation requirement text converting unit, a navigation constraint determining unit, and a navigation request generating unit. The navigation requirement text converting unit is configured to convert the navigation requirement voice input by the user into a navigation requirement text using voice recognition technology. The navigation constraint determining unit is configured to perform semantic analysis on the navigation requirement text to acquire a semantic analysis result, and determine the navigation start point, the navigation end point and the at least one navigation constraint based on the semantic analysis result. The navigation request generating unit is configured to generate the structured navigation request based on the navigation start point, the navigation end point and the at least one navigation constraint.

Furthermore, the navigation request generating unit is configured to generate the structured navigation request using a preset navigation request format including a passing point based on the navigation start point, the navigation end point and at least one passing point information.

Furthermore, the navigation request generating unit is configured to generate the structured navigation request using a navigation request format associated with a route preference based on the navigation start point, the navigation end point and a route preference.

Furthermore, the device further includes a text correcting module. The text correcting module is configured to correct the navigation requirement text based on a context of the navigation requirement text, or based on the semantic analysis result of the navigation requirement text.

Furthermore, the device further includes a requirement voice obtaining module, a navigation constraint determining module, and a new route determining module. The requirement voice obtaining module is configured to obtain a midway navigation requirement voice input by the user during driving along the navigation route. The navigation constraint determining module is configured to determine a new navigation constraint based on the midway navigation requirement voice. The new route determining module is configured to determine a new navigation route based on at least one of the new navigation constraint, a current location of the user, and the navigation route.

Furthermore, the navigation constraint determining module includes a type determining unit and a condition determining unit. The type determining unit is configured to determine a POI type based on the midway navigation requirement voice. The condition determining unit is configured to take a POI belonging to the target POI type as the new navigation constraint.

### Embodiment six

Fig. 8 is a schematic diagram of a device according to embodiment six of the present disclosure. Fig. 8 shows a block diagram of a device 12 suitable for implementing embodiments of the present disclosure. The device 12 illustrated in Fig. 8 is merely an example and should not impose any limitation on the function and scope of embodiments of the present disclosure. For example, the device may be a server or a navigation device.

As shown in Fig. 8, the device 12 is in the form of a general-purpose computing device. The components of device 12 may include, but are not limited to, one or more processors or processing units 16, a system memory 28, and a bus 18 connecting different system components (including the system memory 28 and the processing unit 16).

The bus 18 represents one or more of any of several types of bus structures, including a memory bus or a memory controller, a peripheral bus, an accelerated graphics port, a processor, or a local bus using any of a variety of bus structures. For example, these architectures include, but are not limited to, an Industry Standard Architecture (hereinafter referred to as ISA) bus, a Micro Channel Architecture (hereinafter referred to as MAC) bus, an enhanced ISA bus, a Video Electronics Standards Association (hereinafter referred to as VESA) local bus and Peripheral Component Interconnection (PCI) bus.

The device 12 typically includes a variety of computer system readable media. These media may be any available media accessible by the device 12, including volatile and non-volatile media, removable and non-removable media.

The system memory 28 may include a computer system readable medium in the form of volatile memory, such as a random-access memory (hereinafter referred to as RAM) 30 and/or a high-speed cache memory 32. The computer device 12 may further include other removable or non-removable, volatile or non-volatile computer system storage medium. By way of example only, the storage system 34 may be configured to read and write non-removable and non-volatile magnetic media (not shown in Fig. 8, commonly referred to as a "hard drive"). Although not shown in Fig. 8, a magnetic disk driver for reading from and writing to a removable and non-volatile magnetic disk (such as "floppy disk") and a disk driver for reading from and writing to a removable and non-volatile optical disk (such as compact disk read only memory (hereinafter referred to as CD-ROM), a digital video disc read only memory (hereinafter referred to as DVD-ROM) or other optical media can be provided. In these cases, each driver may be connected to the bus 18 via one or more data medium interfaces. The memory 28 may include at least one program product. The program product has a set of (such as, at least one) program modules configured to perform the functions of various embodiments of the present disclosure.

A program/utility 40 having a set of (at least one) the program modules 42 may be stored in, for example, the memory 28. The program modules 42 include but are not limited to, an operating system, one or more application programs, other programs modules and program data. Each of these examples, or some combination thereof, may include an implementation of a network environment. The program modules 42 generally configured to perform functions and/or methods in embodiments of the present disclosure.

The device 12 may also communicate with one or more external devices 14 (such as, a keyboard, a pointing device, a display 24, etc.). Furthermore, the computer device 12 may also communicate with one or more devices enabling a user to interact with the computer device 12 and/or other devices (such as a network card, a modem, etc.) enabling the computer device 12 to communicate with one or more computer devices. This communication can be performed via the input/output (I/O) interface 22. Also, the computer device 12 may communicate with one or more networks (such as a local area network (hereafter referred to as LAN), a wide area network (hereafter referred to as WAN) and/or a public network such as the Internet) through a network adapter 20. As shown in Fig. 8, the network adapter 20 communicates with other modules of the computer device 12 over the bus 18. It should be understood that, although not shown in Fig. 6, other hardware and/or software modules may be used in conjunction with the computer device 12, which include, but are not limited to, microcode, device drivers, redundant processing units, external disk drive arrays, RAID systems, tape drives, as well as data backup storage systems and the like.

The processing unit 16 is configured to execute various functional applications and data processing by running programs stored in the system memory 28, for example, to implement the method for obtaining an answer provided in embodiments of the present disclosure.

### Embodiment seven

Embodiments of the present disclosure further provides a computer readable storage medium having stored thereon a computer program that, when executed by a processor, causes the navigation method according to embodiments of the present disclosure to be implemented. The method includes: generating a navigation request including a navigation start point, a navigation end point and at least one navigation constraint, based on a navigation requirement voice input by a user; and determining a navigation route based on the navigation start point, the navigation end point and the at least one navigation constraint.

The computer readable storage medium may adopt any combination of one or more computer readable medium(s). The computer readable medium may be a computer readable signal medium or a computer readable storage medium. The computer readable storage medium may be, but is not limited to, for example, an electrical, magnetic, optical, electromagnetic, infrared, or semiconductor system, apparatus, device, component or any combination thereof. More specific examples (a non-exhaustive list) of the computer readable storage medium include: an electrical connection having one or more wires, a portable computer disk, a hard disk, a random access memory (RAM), a read only memory (ROM), an Erasable Programmable Read Only Memory (EPROM) or a flash memory, an optical fiber, a compact disc read-only memory (CD-ROM), an optical memory component, a magnetic memory component, or any suitable combination thereof. In context, the computer readable storage medium may be any tangible medium including or storing programs. The programs may be used by or in connection with an instruction executed system, apparatus or device.

The computer readable signal medium may include a data signal propagating in baseband or as part of carrier wave, which carries computer readable program codes. Such propagated data signal may take any of a variety of forms, including but not limited to an electromagnetic signal, an optical signal, or any suitable combination thereof. The computer readable signal medium may also be any computer readable medium other than the computer readable storage medium, which may send, propagate, or transport programs used by or in connection with an instruction executed system, apparatus or device.

The program code stored on the computer readable medium may be transmitted using any appropriate medium, including but not limited to wireless, wireline, optical fiber cable, RF, or any suitable combination thereof.

The computer program code for carrying out operations of embodiments of the present disclosure may be written in one or more programming languages. The programming language includes an object oriented programming language, such as Java, Smalltalk, C++, as well as conventional procedural programming language, such as "C" language or similar programming language. The program code may be executed entirely on a user's computer, partly on the user's computer, as a separate software package, partly on the user's computer, partly on a remote computer, or entirely on the remote computer or server. In a case of the remote computer, the remote computer may be connected to the user's computer or an external computer (such as using an Internet service provider to connect over the Internet) through any kind of network, including a Local Area Network (hereafter referred as to LAN) or a Wide Area Network (hereafter referred as to WAN).

It should be noted that, the above are only preferred embodiments and applied technical principles of the present disclosure. Those skilled in the art should understand that, the present disclosure is not limited to the specific embodiments described herein, and various obvious changes, readjustments and substitutions that are made by those skilled in the art will not depart from the scope of the present disclosure. Therefore, although the present disclosure has been described in detail by the above embodiments, the present disclosure is not limited to the above embodiments, and more other equivalent embodiments may be included without departing from the concept of the present disclosure, and the scope of the present disclosure is determined by the scope of the appended claims.

## Claims

1. A navigation method, comprising:
generating (S110; S310) a navigation request comprising a navigation start point, a navigation end point and at least one navigation constraint, based on a navigation requirement voice input by a user; and
determining (S120; S320; S250) a navigation route based on the navigation start point, the navigation end point and the at least one navigation constraint.

2. The method of claim 1, wherein the navigation request comprises a structured navigation request, generating (S110; S310) the navigation request comprising the navigation start point, the navigation end point and the at least one navigation constraint based on the navigation requirement voice input by the user comprises:
converting (S210) the navigation requirement voice input by the user into a navigation requirement text using voice recognition technology;
performing (S230) semantic analysis on the navigation requirement text to acquire a semantic analysis result, and determining the navigation start point, the navigation end point and the at least one navigation constraint based on the semantic analysis result; and
generating (S240) the structured navigation request based on the navigation start point, the navigation end point and the at least one navigation constraint.

3. The method of claim 2, wherein the navigation request comprises at least one passing point information, generating (S240) the structured navigation request based on the navigation start point, the navigation end point and the at least one navigation constraint comprises:
generating the structured navigation request using a preset navigation request format comprising a passing point based on the navigation start point, the navigation end point and the at least one passing point information.

4. The method of claim 2, wherein the navigation request comprises a route preference, generating (S240) the structured navigation request based on the navigation start point, the navigation end point and the at least one navigation constraint comprises:
generating the structured navigation request using a navigation request format associated with a route preference based on the navigation start point, the navigation end point and the route preference.

5. The method of claim 2, wherein after converting (S210) the navigation requirement voice input by the user into the navigation requirement text using voice recognition technology, the method further comprises:
correcting (S220) the navigation requirement text based on a context of the navigation requirement text; or
correcting (S220) the navigation requirement text based on the semantic analysis result of the navigation requirement text.

6. The method of any one of claims 1 to 5, wherein after determining (S120; S320; S250) the navigation route based on the navigation start point, the navigation end point and the at least one navigation constraint, the method further comprises:
obtaining (S330) a midway navigation requirement voice input by the user during driving along the navigation route;
determining (S340) a new navigation constraint based on the midway navigation requirement voice; and
determining (S350) a new navigation route based on at least one of the new navigation constraint, a current location of the user, and the navigation route.

7. The method of claim 6, wherein determining (S350) the new navigation route based on the midway navigation requirement voice comprises:
determining a target point of interest type based on the midway navigation requirement voice; and
taking a point of interest belonging to the target point of interest type as the new navigation constraint.

8. A navigation device, comprising:
a navigation request generating module (10), configured to generate a navigation request comprising a navigation start point, a navigation end point and at least one navigation constraint, based on a navigation requirement voice input by a user; and
a navigation route determining module (20), configured to determine a navigation route based on the navigation start point, the navigation end point and the at least one navigation constraint.

9. The navigation device of claim 8, wherein the navigation request comprises a structured navigation request, the navigation request generating module (10) comprises:
a navigation requirement text converting unit, configured to convert the navigation requirement voice input by the user into a navigation requirement text using voice recognition technology;
a navigation constraint determining unit, configured to perform semantic analysis on the navigation requirement text to acquire a semantic analysis result, and determine the navigation start point, the navigation end point and the at least one navigation constraint based on the semantic analysis result; and
a navigation request generating unit, configured to generate the structured navigation request based on the navigation start point, the navigation end point and the at least one navigation constraint.

10. The navigation device of claim 9, wherein the navigation request comprises at least one passing point information, the navigation request generating unit is configured to:
generate the structured navigation request using a preset navigation request format comprising a passing point based on the navigation start point, the navigation end point and the at least one passing point information.

11. The navigation device of claim 9, wherein the navigation request comprises a route preference, the navigation request generating unit is configured to:
generate the structured navigation request using a navigation request format associated with a route preference based on the navigation start point, the navigation end point and the route preference.

12. The navigation device of claim 9, further comprising a text correcting module, configured to:
correct the navigation requirement text based on a context of the navigation requirement text; or
correct the navigation requirement text based on the semantic analysis result of the navigation requirement text.

13. The navigation device of any one of claims 8 to 12, further comprising:
a requirement voice obtaining module, configured to obtain a midway navigation requirement voice input by the user during driving along the navigation route;
a navigation constraint determining module, configured to determine a new navigation constraint based on the midway navigation requirement voice; and
a new route determining module, configured to determine a new navigation route based on at least one of the new navigation constraint, a current location of the user, and the navigation route;
wherein when the navigation constraint determining module is further configured to determine the new navigation constraint based on the midway navigation requirement voice by acts of:
determining a target point of interest type based on the midway navigation requirement voice; and
taking a point of interest belonging to the target point of interest type as the new navigation constraint.

14. A device, comprising:
one or more processors; and
a memory, configured to store one or more programs;
wherein when the one or more programs are executed by the one or more processors, causes the one or more processors to implement the navigation method according to any one of claims 1 to 7.

15. A computer readable storage medium having stored thereon a computer program that, when executed by a processor, causes the navigation method according to any one of claims 1 to 7 to be implemented.
